# EUROPEAN PATENT SPECIFICATION

(11) **EP 0 311 654 B1**
(45) Date of publication and mention of the grant of the patent: **17.03.1993**
(21) Application number: 88902969.0
(22) Date of filing: 15.03.1988
(51) Int. Cl.: H02G 3/06

(54) **A PROFILED SECTION JOINING DEVICE**
VERBINDUNGSANORDNUNG AUS EINER PROFILSEKTION
DISPOSITIF DE JONCTION DE SECTIONS PROFILEES

(30) Priority: 16.03.1987 SE 8701070
(43) Date of publication of application: 19.04.1989
(73) Proprietor: THORSMAN & CO AB, S-611 24 Nyköping (SE)
(72) Inventor: OLOFSSON, Roland, Erik, S-611 32 Nyköping (SE)
(74) Representative: Johansson, Lars-Erik (SE)
(86) International application number: SE8800131
(87) International publication number: WO8807282

(56) References cited:
- DE-A- 3 139 287

## Description

The present invention relates to a method and a device for joining together profiled sections, preferably such beam-like profiles of the kind intended for electric-cable ducting or channeling systems and including at least a pair of parallel-extending and oppositely directed grooves groove into which there is meant to be fitted a profiled-section joining member in a manner such as to bridge the join location when joining of two such profiled sections is complete.

### BACKGROUND PRIOR ART

The extrusion of profiled sections from both metal and plastics is being applied increasingly and has resulted in increased use of profiled sections for the most widely diverse purposed and within widely separated fields. In addition, the cross-sectional shapes of such profiles have become progressively more complicated. One area in which the use of profiled sections has increased is that of laying or installing electric cables and telecommunication cables. To this end beam-like profiles have been developed in which electric cables can be protected against electrical disturbances and against damage from external sources. Irrespective of the use for which the profiles are intended, there is normally a need to be able to join different profiles together easily, and primarily in their longitudinal direction. In order to enable these profiles to be joined together more easily, the profiles are often provided with a pair of parallel-extending and oppositely directed grooves grooves into which joining devices are fitted, these devices covering the area of the completed join. The joining device normally has the form of a rail of rectangular section, which is first inserted into the pair of grooves on one profiled section so as to extend partially into a corresponding pair of grooves in the other profiled section when the profiled sections are brought together with the respective profiled shapes coinciding.

Various methods have been devized for locking the joining device in its join-bridging position. One method involves providing the device with screw-threaded holes in which stop screws are screwed against the profile part situated between of the grooves, to prevent the joining device from moving in relation to the grooves. According to another method the joining device is provided with mutually overlapping slots which extend from the short ends of the device, these slots causing the joining device to abut the bottoms of the grooves under a powerful spring force when inserting the device into the grooves. According to another method, the joining device is provided with a longitudinally extended corrugated or pleated centre part made of spring steel or like material, which also brings the joining device into powerful abutment with the bottoms of the grooves.

One feature common to known joining devices of this kind is that in order to join the sections together, the devices must be placed first between the grooves of one section and then, after bringing the profiled sections together, must be moved through half of its length into the corresponding grooves of the other profiled section. When the joining device is of the kind provided with stop screws, one of the screws is tightened down when the joining device is first placed in the grooves of one section, in order to prevent the device from falling out of the grooves while manipulating the profiled section concerned. When the sections have been positioned, any screw which has been tightened is unscrewed and the joining device is moved through half its length into the other section, whereafter all stop screws are finally screwed down. When the joining device is positioned within the contours of a beam-like profiled section, the task of sliding the device and tightening the screws can be difficult and time-consuming. Still more difficulty is found in sliding or displacing a joining device of the kind which is in spring-abutment with the bottoms of the grooves, since the device often moves so tightly in the grooves that it is necessary to use a hammer to position the device correctly, the suspension devices of the sections being subjected herewith to stresses of a kind from a direction for which they are not constructed.

A further drawback with the known joining devices is that the fitter repeatedly forgets to place in position the device or devices required to effect a join in one of the profiled sections. This omission is first noticed when the profiled sections are in position and joining of the sections is to be completed, by attaching the ends of the sections together with the aid of the joining device. The fitter then either neglects to use a joining device and trusts that suspension of the profiled sections will in itself be sufficiently stable to prevent mutual displacement of the sections, or accepts the consequences of his forgetfulness and dismantles one section to the extent required, so that the requisite joining device can be inserted into the grooves concerned.

A known method of joining together profiled sections is shown in DE, A1, 3 319 287. According to this method profiled sections of an electric-cable ducting system made of bent sheet metal forming bottoms and upright side legs are jointed together. The legs are at their edges folded inwardly and joining members bridging the join location are fitted inside the legs between said edges and bottoms of the sections to be jointed. The joining members lock the profiled sections to each other by means of protusions arrenged on their one edge, which protusions engage slots in the bottom of the sections while the second edge of the joining member engages the inwardly folded edge of the corresponding leg. The engagement of the joining member is made possible by the fact that the joining member, which in its non fitted state has an obtuse angle V-shaped cross-sectional shape, is fitted with a central bend-facilitating weakening, with the help of which the joining member through an over-center action can be brought to engage said slots and leg edges.

### SUMMARY OF THE INVENTION

The object of the invention is to provide for the purpose of joining together profiled sections a method and a device which are not encumbered with the drawbacks associated with the known methods and devices. This object is achieved with the method and the joining device according to the invention which is concerned preferably with joining together profiled sections which form part of an electric-cable ducting or channelling system. The characteristic features of the invention are set forth in the following claims.

### BRIEF DESCRIPTION OF THE DRAWINGS

The invention will now be described with reference to an exemplifying embodiment thereof and with reference to the accompanying drawings, in which
Figure 1 is a sectional view of part of a profiled section provided with a pair of parallel-extending and oppositely directed grooves grooves and shows a joining device being fitted into the grooves;
Figure 2 is a sectional view of the profiled secion illustrated in Figure 1 with the joining device expanded in the pair of grooves and firmly locked;
Figure 3 is a perspective view of two profiled sections which form part of an electric-cable ducting system and which have been joined together by means of a joining device shown expanded in the grooves and bridging over the join location; and
Figure 4 illustrates in perspective the end part of a profiled section forming part of an electric-cable ducting system and shows an unexpanded joining device in one of the pair of parallel grooves of the section.

### DESCRIPTION OF A PREFERRED EMBODIMENT

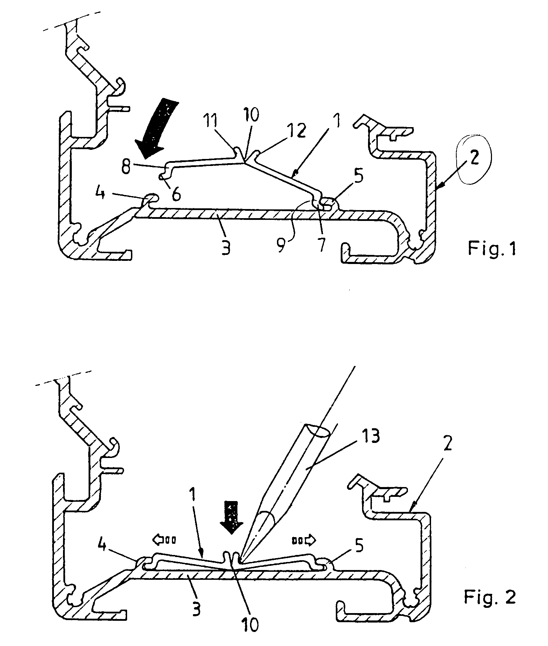

Figure 1 shows a joining device 1 being fitted into the pair of parallel-extending and oppositely directed grooves of a profiled section 2, said pair of grooves extending on both sides of a flat section-part 3 defined laterally by legs 4, 5 the edges of which are folded inwardly such as to form oppositely directed grooves.

The joining device, or connector, comprises an obtuse angle V-shaped rail or bar having provided at the apex of the V a bend-facilitating weakening 10 formed by thinning the rail at this location. The side edges 6, 7 are bent into the shape of an S, so as to enable said edges to be brought into engagement with the edges of the legs of the pair of grooves while at the same time forming spacers 8, 9. The joining device 1 need not be slid into the grooves through the grooves mouth, but is positioned by first bringing one side edge 7 into engagement with the groove leg 5, as shown in Figure 1, and then twisting or rotating the joining device in the direction of the arrow, past the edge of groove leg 4 and into abutment with the groove section part 3. Thus, joining the device 1 can be positioned over a joining location subsequent to bringing the profiled sections in end-to-end contact.

Figure 2 illustrates how the joining device 1 is expanded so as to be locked in the pair of grooves, subsequent to having placed the device 1 into the pair of grooves of the profiled section 2. This is achieved by flattening the initially obtuse angled V-shaped joining device 1 and causing the device to flip over inwardly in an over-centre action along the weakening 10, by applying pressure adjacent said weakening, for instance with the aid of a screwdriver 13. The weakening 10 has located on respective sides thereof stiffening strips 11, 12 which facilitate correct positioning of the screwdriver on the joining device and also distribute the pressure applied along the weakening 10. Due to the over-centre action occurring when the joining device is flattened, the force at which the edges of the device engage the edges of the grooves will be many times greater than the force exerted by means of the screwdriver. In order to loosen the joining device subsequent to locking the same in the grooves, it is necessary to insert a screwdriver or like tool beneath the device and restore the device to its original obtuse angle V-shape.

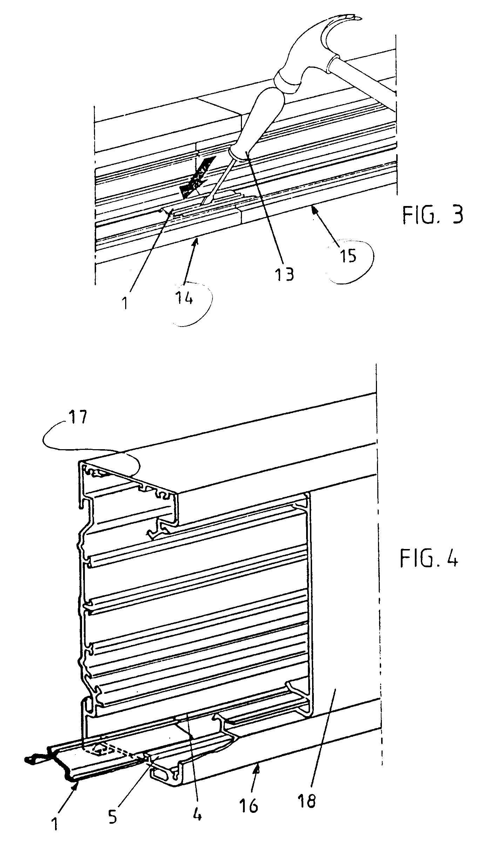

Figure 3 illustrates in perspective two beam-like profile sections 14, 15 forming part of an electric-cable ducting system and joined together by means of a joining device 1 which has been passed through the common front opening of the sections and placed in a pair of grooves located in the bottom wall of respective beams and expanded in the grooves by means of a light hammer-blow on the screwdriver 13.

Figure 4 illustrates in perspective the end part of a profiled section 16 forming part of an electric-cable ducting system and shows an unexpanded joining device 1 partially inserted into one pair of grooves 4, 5 of the profiled section. Large profiled sections will be suitably provided with several pairs of grooves and the reference 17 in Figure 4 illustrates a section part between additional grooves. Electric-cable ducting systems of the kind illustrated in the figure will also include cover plates, and one such cover plate is referenced 18 in Figure 4.

It will be understood that the invention is not restricted to joining together profile sections of the aforedescribed kind or for the described purpose, and that both the configuration of the profile and the configuration of the joining device can be varied within the scope of the invention. For example, the legs 4, 5 which define the grooves laterally may be slightly higher than those illustrated and the profile section may be provided with spacer strips positioned in the grooves adjacent said legs. This modification obviates the need for spacers on the joining device, which may then comprise a simple, angled plate the side edges of which will rest on the spacer strips when the device is placed in the pair of grooves, and can be expanded and pressed or folded inwardly in an over-centre action. Those savings made on the joining device when practicing this alternative embodiment do not compensate for the greater cost of the profile sections, and hence the embodiment first described is preferred.

The joining device may also be used to fixate profiled sections relative to one another prior to welding the sections together or joining said sections by some other means.

## Claims

1. A method for joining together profiled sections in end-to-end relationship, preferably beam-like profiled sections forming part of an electric cable ducting system, said sections each including at least one pair of parallel-extending and oppositely directed grooves in which a joining device is intended to be fitted in a manner to bridge the joining location upon completion of the join, characterized by bringing the profiled sections (2; 14, 15) in end-to-end abutment such that the contours of the profile coincide: placing in the pair of grooves a joining device (1) which has the form of a rail or bar and which in its non-fitted state has an obtuse angle V-shaped cross-sectional shape, and which has a bend-facilitating weakening (10) located along the apex of the V and presents side edges (6, 7) configured to engage in and against the side edges (4, 5) of the grooves and also to form spacer means (8, 9) which enable the device (1) to be flattened and pressed inwards at the join location; and by applying pressure to the joining device in a manner such as to flatten and expand said device in an over-centre action against the edges (4, 5) of the grooves while simultaneously locking the profiled sections (2; 14, 15) one to the other.

2. A joining device (1) for carrying out the method accordto Claim 1, characterized in that the device consists of a rail or bar which in its non-fitted state is obtuse angled V-shaped in cross-section and has a bend-facilitating weakening (10) along the apex of the V, and further having side edges (6, 7) which are configured so as to engage the side edges (4, 5) of when fitted into the pair of grooves in each profiled section, and also to form spacer means (8, 9) which enable the joining device (1) to be flattened and expanded outwardly against the side edges (4, 5) of the grooves while at the same time flipping-over the central part of the in an over-centre action the device (1) so as to lock said device in the grooves.

## Patentansprüche

1. Verfahren zum Verbinden von auf Stoß angeordneten Profilen, vorzugsweise von trägerförmigen Profilen, die Teil eines Leitungssystems für elektrische Kabel bilden, wobei jedes der Profile mindestens ein Paar parallel verlaufender und gegenüberliegend angeordneter Nuten enthält, in welche ein Verbindungselement so eingepaßt werden kann, daß die Verbindungsstelle bei Fertigstellung der Verbindung überbrückt wird, **dadurch gekennzeichnet,** daß die Profile (2; 14, 15) auf Stoß angeordnet werden, wobei die Konturen der Profile übereinstimmen; daß ein Verbindungselement (1) in Form einer Schiene oder Stange in das Nutenpaar eingesetzt wird, wobei das Verbindungselement im nicht eingepaßten Zustand einen stumpfwinkligen, V-förmigen Querschnitt aufweist, eine biegungserleichternde Schwächung (10) am Scheitelpunkt des V-Querschnitts enthält und Seitenkanten (6, 7) besitzt, deren Form für den Eingriff in und gegen die Seitenkanten (4, 5) der Nuten angepaßt ist, und welche Seitenkanten ferner Abstandshalter (8, 9) bilden, die ein Abflachen und Eindrücken des Verbindungselementes (1) an der Verbindungsstelle ermöglichen; und daß das Verbindungselement durch Druckbeaufschlagung so flachgedrückt wird, daß es über seine gestreckte Totlage hinaus gegen die Kanten (4, 5) der Nuten ausgedehnt wird, wobei gleichzeitig die Profile (2; 14, 15) miteinander verriegelt werden.

2. Verbindungselement (1) zur Durchführung des Verfahrens nach Anspruch 1, dadurch gekennzeichnet, daß das Verbindungselement aus einer Schiene oder Stange besteht, die im nicht eingepaßten Zustand einen stumpfwinkligen, V-förmigen Querschnitt aufweist, eine biegungserleichternde Schwächung (10) am Scheitelpunkt des V-Querschnitts enthält und ferner Seitenkanten (6, 7) besitzt, wobei die Seitenkanten so gestaltet sind, daß sie beim Einsetzen des Verbindungselementes in das Nutenpaar der beiden Profile in die Seitenkanten (4, 5) eingreifen und daß sie außerdem Abstandshalter (8, 9) bilden, welche Abstandshalter es ermöglichen, daß das Verbindungselement (1) flachdrückbar und nach außen gegen die Seitenkanten (4, 5) der Nuten dehnbar ist, wobei gleichzeitig der Mittelteil des Verbindungselementes (1) über die gestreckte Totlage hinweg schnellt und dadurch das Verbindungselement in den Nuten blockiert wird.

## Revendications

1. Procédé de jonction de sections profilées dans une disposition bout à bout, ces sections profilées, de préférence en forme de poutres, faisant partie d'un système de canaux pour câbles électriques, et ces sections comprenant chacune au moins une paire de rainures parallèles dirigées dans des directions opposées et dans lesquelles on doit adapter un dispositif de jonction de manière à ponter l'endroit du joint à la fin de la jonction, procédé caractérisé en ce qu'il consiste à amener les sections profilées (2 ; 14, 15) en butée bout à bout de façon que les contours des profilés coïncident ; à placer dans la paire de rainures un dispositif de jonction (1) se présentant sous la forme d'un rail ou d'une barre et présentant, dans son état non monté, une section transversale en forme de V à angle obtus, ce dispositif de jonction comportant également une partie d'affaiblissement (10) facilitant la courbure, cette partie d'affaiblissement étant située le long du sommet du V et comportant des bords latéraux (6, 7) configurés de manière à s'engager dans les côtés latéraux et contre ces côtés latéraux (4, 5) des rainures, ainsi que de manière à former des moyens d'écartement (8, 9) permettant d'aplatir le dispositif (1) et de le presser vers l'intérieur à l'endroit du joint ; et à appliquer une pression au dispositif de jonction de manière à aplatir et à dilater ce dispositif de jonction dans une action de basculement centré contre les bords (4, 5) des rainures, tout en verrouillant simultanément les sections profilées (2 ; 14, 15) l'une à l'autre.

2. Dispositif de jonction (1) pour la mise en oeuvre du procédé selon la revendication 1, dispositif caractérisé en ce qu'il consiste en un rail ou en une barre présentant, dans son état non-monté, une section transversale en forme de V à angle obtus, et comportant une partie d'affaiblissement (10) facilitant la courbure le long du sommet du V, ce dispositif de jonction comportant en outre des bords latéraux (6, 7) configurés de manière à s'engager dans les bords latéraux (4, 5) des rainures lorsque le dispositif est monté dans la paire de rainures de chaque section profilée, ainsi que de manière à former des moyens d'écartement (8, 9) permettant d'aplatir et de dilater le dispositif de jonction (1) vers l'extérieur contre les bords latéraux (4, 5) des rainures, tout en produisant en même temps un retournement de la partie centrale du dispositif (1) dans une action de basculement centré, de manière à verrouiller ce dispositif dans les rainures.
